# EUROPEAN PATENT SPECIFICATION

(11) **EP 4 509 343 B1**
(45) Date of publication and mention of the grant of the patent: **21.10.2026**
(21) Application number: 25150079.9
(22) Date of filing: 30.05.2013
(51) Int. Cl.: F02M 37/02, F16K 17/04, F04F 5/46, F02M 25/08, B60K 15/035

(54) **CONSTANT TENSION SNAP-FIT ASSEMBLY**
SCHNAPPVERBINDUNGSANORDNUNG MIT KONSTANTER SPANNUNG
ENSEMBLE ENCLIQUETABLE À TENSION CONSTANTE

(30) Priority: 01.02.2013 US 201361760023 P; 01.02.2013 US 201361760022 P; 02.04.2013 US 201361807461 P
(43) Date of publication of application: 19.02.2025
(62) Document number(s) of the earlier application(s) in accordance with Art. 76 EPC: 13733106.2 / 2 951 475
(73) Proprietor: Eaton Intelligent Power Limited, Dublin D04 Y0C2 (IE)
(72) Inventor: WALTER, Stefan, 76149 Karlsruhe (DE); MILLS, Vaughn, Chelsea, 48118 (US); PIFER, Daniel, Lee, Chelsea, 48118 (US)
(74) Representative: Schwan Schorer & Partner mbB

(56) References cited:
- US-A1- 2002 017 281
- US-A1- 2003 188 786
- US-A1- 2005 126 633

## Description

### TECHNICAL FIELD

The present teachings generally include an assembly that maintains a constant tension between a first and a second component, such as between a vapor valve housing and an end cap. In US 2005/126633 A1 there is disclosed a valve assembly for attachment in an aperture of a fuel tank wall includes a cap member with a nozzle, a carrier stage, a float stage, and a float housing. The carrier stage has a carrier carrying a sealing element with a relatively larger orifice opposing a relatively smaller orifice. The float stage includes a pivot pin and a float defining a stem. The pivot pin is movably located on the stem with the sealing element located apart from the float. The float contacts a portion of the sealing element during a refilling condition, and the sealing element seals the nozzle to prevent overfilling the fuel tank. The orifices permit the valve assembly to reopen in stages.

### BACKGROUND

Plastic components can change their shape under different operating conditions. For example, plastic can swell in the presence of a medium such as automotive fuel, and then re-dry, shrinking to a smaller size. The relative fit of plastic components connected to one another can thus be dependent on the operating conditions.

### SUMMARY

The present invention is an assembly as it is defined in claim 1. The assembly includes a first component having a first outer surface and a plurality of spaced extensions extending outward from the first outer surface. The first component is an end cap. The assembly includes a second component that has a flexible rim surrounding a cavity. The second component is a vapor valve housing. The rim has a plurality of spaced recesses, and is biased toward an unflexed state when in a flexed state. The first component is configured to fit at least partially into the cavity with the rim flexing to surround the first component and trap the a plurality of extensions in the plurality of recesses. The a plurality of spaced extensions are configured to prevent the flexible rim from returning to the unflexed state over a predetermined range of operating conditions, wherein the plurality of spaced extensions is trapped in the plurality of recesses, the bias of the flexible rim thereby forcing the first component toward the second component over the predetermined range of operating conditions. The assembly can be referred to as a snap-fit assembly because the bias of the flexible rim to the unflexed state causes it to snap over the extensions.

The first component is a housing of a vapor valve assembly, such as a liquid trap assembly having the recesses. The housing and end cap can be configured to support a jet pump assembly so that the constant bias of the rim and resultant forces on the housing and the end cap provide axial forces on the jet pump assembly preventing relative movement of a jet pump nozzle and a nozzle carrier.

The above features and advantages and other features and advantages of the present teachings are readily apparent from the following detailed description of the best modes for carrying out the present teachings when taken in connection with the accompanying drawings.

### BRIEF DESCRIPTION OF THE DRAWINGS

FIGURE 1 is a schematic illustration in cross-sectional view of a liquid trap assembly with a liquid trap and an integrated jet pump assembly, taken at the lines 1-1 in Figure 2.
FIGURE 2 is a schematic perspective illustration of the liquid trap assembly of Figure **1****.**
FIGURE 3 is a schematic illustration in fragmentary cross-sectional view of the jet pump assembly supported in the liquid trap assembly of Figure 1.
FIGURE 4 is a schematic side view illustration of the jet pump assembly of Figure 1.
FIGURE 5 is a schematic illustration in cross-sectional view of the jet pump assembly in Figure 4 taken at lines 5-5 in Figure 4.
FIGURE 6 is a schematic cross-sectional illustration taken at lines 6 in Figure 4 of a venturi nozzle of the jet pump assembly of Figure 4 with the nozzle carrier removed.
FIGURE 7 is a schematic cross-sectional illustration taken at lines 7 in Figure 4 of a nozzle carrier of the jet pump assembly of Figure 4 with the venturi nozzle removed.
FIGURE 8 is a schematic illustration in cross-sectional view of an alternative jet pump assembly for use in the liquid trap assembly of Figure 1.
FIGURE 9 is a schematic illustration of the liquid trap assembly of Figure 1 mounted in a fuel tank and part of a vehicle fuel system.

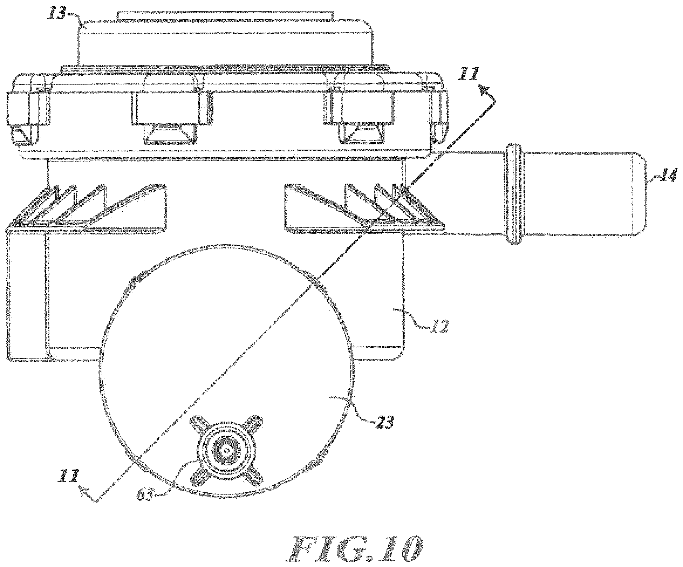

FIGURE 10 is a schematic illustration in end view of the liquid trap assembly of Figure 1.
FIGURE 11 is a schematic illustration in cross-sectional view of the liquid trap assembly taken at lines 11-11 in Figure 10 and showing a housing connected to an end cap.
FIGURE 12 is a close-up fragmentary cross-sectional view of an extension of the housing trapped in a recess of the end cap under a first operating condition, not representing the invention.
FIGURE 13 is a close-up fragmentary cross-sectional view of the extension of the housing trapped in the recess of the end cap under a second operating condition, not representing the invention.
FIGURE 14 is a close-up fragmentary cross-sectional view of the extension of the housing trapped in the recess of the end cap under a third operating condition, not representing the invention.
FIGURE 15 is a close-up fragmentary cross-sectional view of an extension for the housing shown trapped in the recess of the end cap under the first operating condition, representing the invention.
FIGURE 16 is a close-up fragmentary cross-sectional view of the alternate extension of the housing trapped in the recess of the end cap under the second operating condition, representing the invention.
FIGURE 17 is a close-up fragmentary cross-sectional view of the alternate extension of the housing trapped in the recess of the end cap under the third operating condition, representing the invention.
FIGURE 18 is a schematic illustration in exploded perspective view of the liquid trap assembly of Figure 2.

### DETAILED DESCRIPTION

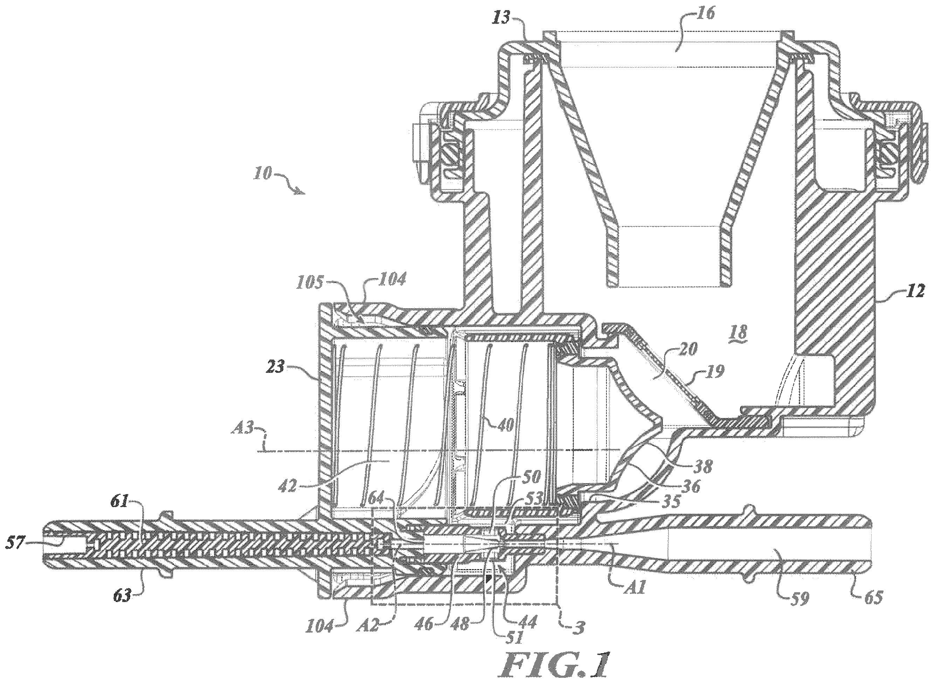

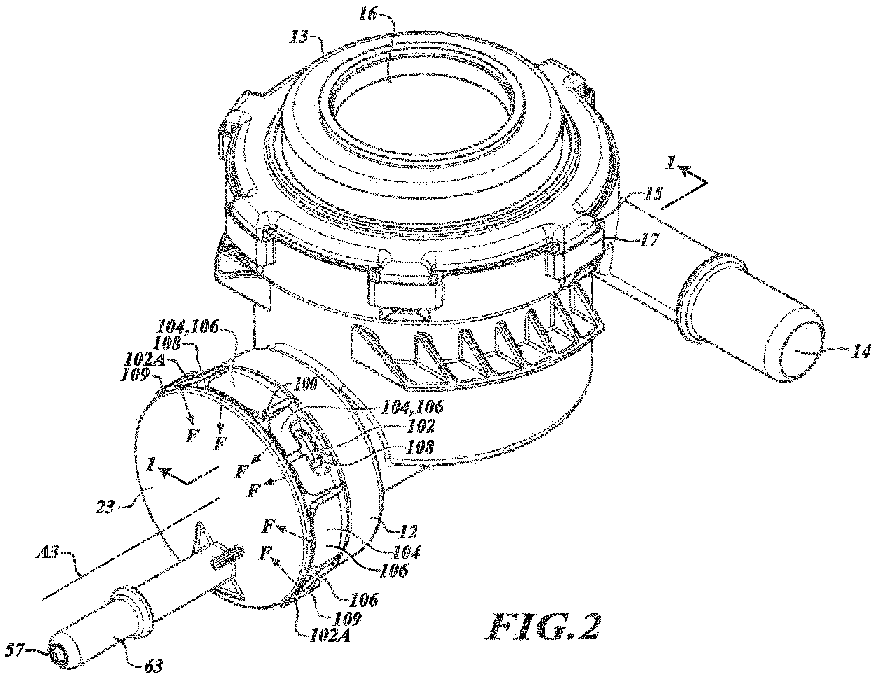

Referring to the drawings, wherein like reference numbers refer to like components throughout the several views, Figure 1 shows a liquid trap assembly 10 that efficiently drains liquid collected from vapor. The liquid trap assembly 10 can also be referred to as an active liquid drain. The liquid trap assembly 10 has a housing 12. The housing 12 has a first port, referred to as a vapor flow inlet 14 (shown in Figure 2) and a second port, referred to as a vapor flow outlet 16 in fluid communication with an interior cavity 18 formed at least in part by the housing 12. As shown in Figure 2, the outlet 16 is formed by an upper cap 13 secured to the housing 12 with tabs 15 fit through tab retainers 17. Vapor flows from the vapor flow inlet 14, through the cavity 18, to the vapor flow outlet 16. Liquid entrained in the vapor flow is collected in a liquid trap 20 formed by the housing 12 at the bottom of the housing 12. A filter 19 extends across the lowest portion of the trap 20. The outlet 16 can be replaced by an outlet valve, or the housing 12 can have no outlet.

An end cap 23 is connected to the housing 12 in a manner described herein. The housing 12 can be a one-piece, molded plastic component. The end cap 23 can also be a one-piece, molded plastic component. Either or both of the housing 12 and an end cap 23 described can have features that promote separation of liquid and vapor, such as baffles and ribs. As used herein, the end cap 23 is referred to as a first component of the liquid trap assembly 10, and the housing 12 is referred to as a second component of the liquid trap assembly 10.

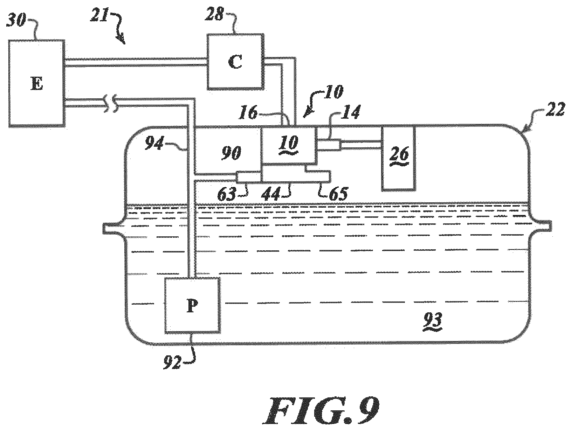

The liquid trap assembly 10 can be used in many applications. In one application described herein, the liquid trap assembly 10 is used in a fuel vapor recovery system 21 on a vehicle, shown schematically in Figure 9. The vehicle can be a diesel, gasoline, or hybrid application. Vapor is vented from a fuel tank 22 that contains liquid fuel 93. The vapor is vented through a vapor vent valve 26 that may provide pressure relief, rollover shutoff, and other functions. Vapor flows from the vapor vent valve 26 to the liquid trap assembly 10 through the inlet 14 and exits through the outlet 16 to a vapor recovery device, such as a canister (C) 28 filled with carbon granules. The canister 28 is periodically purged to an engine (E) 30. The liquid trap assembly 10 is shown mounted within the fuel tank 22. Alternatively, the liquid trap assembly 10 can be external to the fuel tank 22.

Referring to Figure 1, the housing 12 forms a first opening 35 in a sidewall adjacent to the liquid trap 20. The opening 35 is selectively closed by a check valve 36. Any type of valve can be used to close the opening 35, or there can be no valve at the opening 35. The check valve 36 includes a valve body 38 and a spring 40 that biases the valve body 38 into the first opening 35 to close the opening 35 and separate the cavity 18 and liquid trap 20 from a valve cavity 42 in which the spring 40 and valve body 38 are movable, as described herein. When the check valve 36 closes the opening 35, it also prevents liquid from entering or exiting the liquid trap 20 through the opening 35. The valve body 38 is generally annular and has a generally cone-shaped end that extends into the cavity 18. The spring 40 has a diameter that fits inside the generally annular valve body 38. A valve body with a different shape can also be used. For example, a ball valve may be used to close the opening 35.

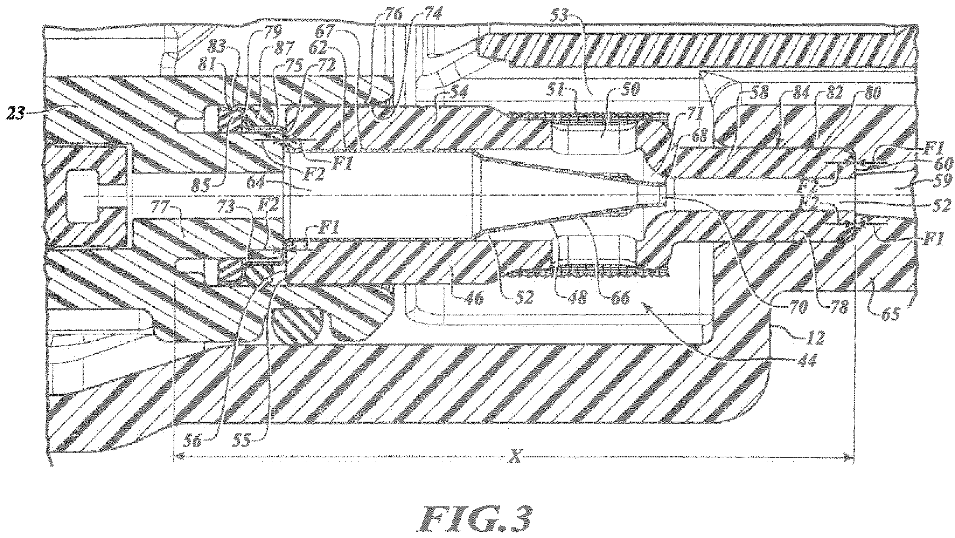

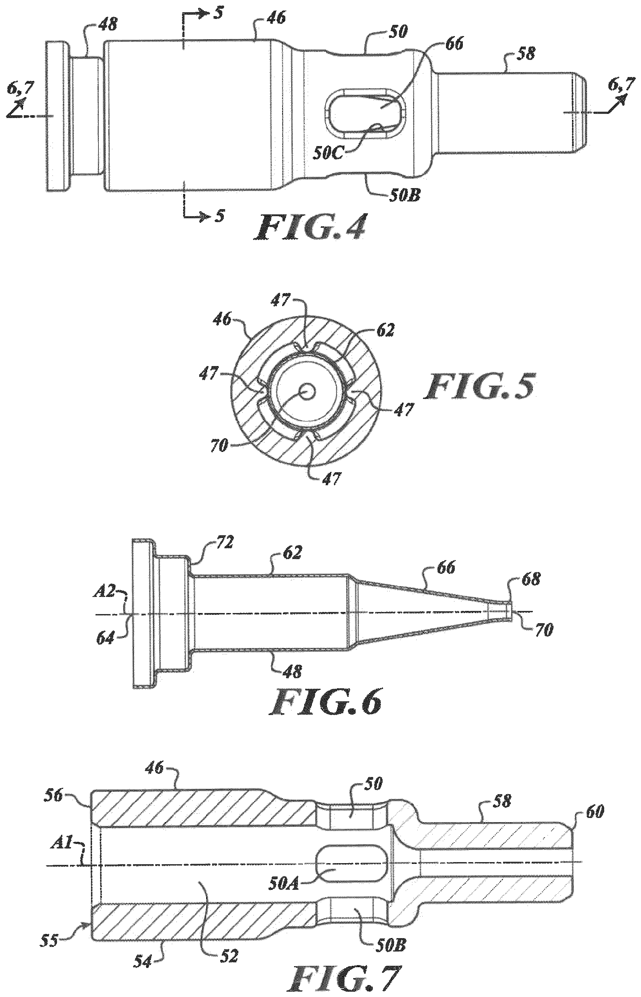

The liquid trap assembly 10 includes a jet pump assembly 44. The jet pump assembly 44 includes a nozzle carrier 46 and a venturi nozzle 48. The nozzle carrier 46 has an entrance port 50 that extends through a generally annular outer wall 55 of the nozzle carrier 46 in operative fluid communication with the liquid trap 20, as best shown in Figure 1. That is, a lower extent 53 of the cavity 42 is in communication with the entrance port 50. When the valve 36 opens, the spring 40 depresses, and the valve body 38 will move past the lower extent 53 (to the left in Figure 1) so that the liquid trap 20 empties to the lower extent 53 and through the entrance port 50 into a longitudinal passage 52 (shown in Figure 3) of the nozzle carrier 46. The longitudinal passage 52 extends completely through the nozzle carrier 46 as best shown in Figures 3 and 7, and is larger in the carrier portion 54 than in the diffuser portion 58. The longitudinal passage 52 is in fluid communication with the entrance port 50. The valve 36 is configured to prevent draining of the liquid trap 20 by the jet pump assembly 44 when a pressure differential created by liquid flow through the venturi nozzle 48 is below a predetermined level, and to allow fluid communication between the jet pump assembly 44 and the liquid trap 20 when the pressure differential is above the predetermined level. It should be appreciated, however, that the valve 36 is optional, and the jet pump assembly 44 could drain the liquid trap 20 sufficiently if no valve 36 was present.

Flow through the venturi nozzle 48 induces draining of the liquid trap 20. As shown in Figure 9, the jet pump assembly 44 is connected by tubing 90, 94 to a fuel pump 92 submerged in the liquid fuel 93. The fuel pump 92 is also connected to the engine 30 via fuel discharge tubing 94. Fuel is discharged from the fuel pump 92 at relatively high pressure through the fuel discharge tubing 94. The tubing 90 branches from the fuel discharge tubing 94, providing relatively high pressure liquid fuel flow to an inlet portion 63 of the housing 12 that is in fluid communication with an inlet 64 of the nozzle 48 indicated in Figure 3.

Referring again to Figure 1, fluid flowing out of the nozzle 48 creates a vacuum or at least a relatively low pressure area in the longitudinal passage 52 adjacent the entrance port 50. Pressure is also reduced in the cavity 42 due to the vacuum or low pressure in the longitudinal passage 52, creating a pressure differential across the valve body 36, as pressure in the cavity 42 is lower than pressure in the cavity 18. When the pressure differential reaches a predetermined level such that a force created by the pressure differential on the area of the valve body 38 exposed to the cavity 18 is greater than the force keeping the check valve 36 shut (in this case the force of the spring 40), the valve body 38 will move toward the end cap 23, compressing the spring 40 and establishing fluid communication between the liquid trap 20 and the entrance port 50. The jet pump assembly 44 is a fuel discharge assembly that has the propelling mechanism, due to the pressure differential and jet action through the nozzle 48, to discharge liquid fuel in the trap 20 to the fuel tank 22.

The jet pump assembly 44 utilizes high pressure fluid from the fuel pump 92 which flows through the nozzle 48 with a high velocity. The flow through the nozzle 48 is referred to as the primary flow or primary stream. The high velocity fluid leaving the nozzle 48 creates a low pressure or a vacuum in the area adjacent the nozzle 48, such as at the entrance port 50. The pressure differential between the high pressure fluid exiting the nozzle 48 and the lower extent 53 of the cavity 42 adjacent the nozzle 48 induces flow, such as through the entrance port 50, referred to as an induced stream or secondary flow.

Referring to Figure 1, the jet pump assembly 44 has an optional pressure reducer 61 located in the passage 57 formed by the inlet portion 63 of the housing 12, upstream of the inlet 64 and the nozzle 48. The pressure reducer 61 can instead be located further upstream of the jet pump assembly 44 such as in a vent line leading to the jet pump assembly 44. The pressure reducer 61 reduces pressure and volume flow rate of fluid flow through the inlet portion 63 to the nozzle 48, while increasing velocity of flow through the nozzle 48.

A diffuser portion 58 of the nozzle carrier 46 is shown in Figure 3 supported by the housing 12. The longitudinal passage 52 in the diffuser portion 58 is in fluid communication with a diffuser passage 59 formed by an outlet 65 of the housing 12 (best shown in Figure 1) to increase pressure and reduce velocity of the fluid. Many factors affect the performance and efficiency of the jet pump assembly 44, including fluid molecular weight, feed temperature, position of the nozzle 48, throat dimension, motive velocity, Reynolds number, pressure ratio, specific heat ratio, and the angle between the motive and induced stream.

The nozzle carrier 46 also has a carrier portion 54 extending from a first end 56 of the nozzle carrier 46 to the entrance port 50. The diffuser portion 58 of the nozzle carrier 46 extends from the entrance port 50 to a second end 60 of the nozzle carrier 46 opposite the first end 56. Figures 4 and 7 show that there are several additional ports 50A, 50B, 50C that extend through the nozzle carrier 46, and are spaced angularly about the nozzle carrier 46 in the vicinity of the entrance port 50. A fourth entrance port 50A is opposite port 50C and between ports 50 and 50B. A filter 51 shown in Figure 3 surrounds the nozzle carrier 46 at the port 50 to screen liquid entering the port 50 from the trap 20. The nozzle carrier 46 has a longitudinal center axis A1.

The venturi nozzle 48 has a body portion 62 with an inlet 64, and a nozzle portion 66 with a nozzle tip 68 forming an outlet 70. The nozzle 48 also has a longitudinal center axis A2. The nozzle carrier 46 and the venturi nozzle 48 are configured so that the body portion 62 fits to the carrier portion 54 in the longitudinal passage 52, with the nozzle portion 66 extending past the entrance port 50 so that the nozzle tip 68 is directed into the diffuser portion 58. The fit of the body portion 62 to the carrier portion 54 is a press-fit. As shown in Figure 5, the nozzle carrier 46 has spaced, radially-inwardly extending ridges 47 extending into the longitudinal passage 52 so that the body portion 62 of the venturi nozzle 48 is fit to the carrier portion 54 of the nozzle carrier 46 at the ridges 47.

The nozzle 48 is inserted into the longitudinal passage 52 from the first end 56 until a first stepped shoulder 72 of the body portion 62 abuts an outer wall 55 of the nozzle carrier 46 at the first end 56. In this position, a predetermined clearance 71 exists between the tip 68 and the inner wall of the diffuser portion 58 defining the passage 52.

Alignment of the longitudinal axis A2 of the venturi nozzle 48 with the longitudinal axis A1 of the nozzle carrier 46 is dependent only on the nozzle carrier 46 and the venturi nozzle 48 when the venturi nozzle 48 is fit to the nozzle carrier 46 in this manner. More specifically, all other surrounding components that support the jet pump assembly 44 are configured to have larger radial clearances between the jet pump assembly 44 and the components than a clearance 67 of the tight press-fit of the body portion 62 of the nozzle 48 to the carrier portion 54 of the nozzle carrier 46. The axes A1, A2 remain substantially aligned under all operating conditions due to the controlled clearance 67. For example, in Figure 3, the carrier portion 54 is supported by the end cap 23 in a first cylindrical cavity 74 of the end cap 23. A first clearance 76 between the end cap 23 and the carrier portion 54 is much larger than the press-fit clearance 67 of the nozzle body portion 62 to the carrier portion 54. A clearance 73 between a first stepped portion 75 of the nozzle 48 and a cylindrical extension 77 of the end cap 23 is also larger than the clearance 67 of the nozzle 48 to the nozzle carrier 46. Finally, a second shoulder 79 of the nozzle 48 flares outward to form a second shoulder portion 81. A clearance 83 between the second shoulder portion 81 and the end cap 23 in the cavity 74 is larger than the press-fit clearance 67 of the nozzle 48 to the nozzle carrier 46. A resilient ring 85 stabilizes the second shoulder portion 81 on the extension 77. A resilient O-ring seal 87 stabilizes the first shoulder portion 75 on the extension 77.

The diffuser portion 58 of the nozzle carrier 46 is press-fit to the housing 12 in a cylindrical cavity 78 of the housing 12 along only a small press-fit portion 80 of an exterior surface 84 of the diffuser portion 58. In other words, the radial clearance 82 between the diffuser portion 58 and the housing 12 at the cavity 78 is greater in all other areas than at the press-fit portion 80. The nozzle 48 can be a machined, deep drawn metal in order to ensure the precise press-fit clearance 67 of the nozzle 48 to the nozzle carrier 46. The nozzle carrier 46 can be a plastic injection-molded component such as a glass-filled polyoxymethylene plastic (POM) or similar grade with a predetermined low fuel-swell performance in the presence of automotive fuel.

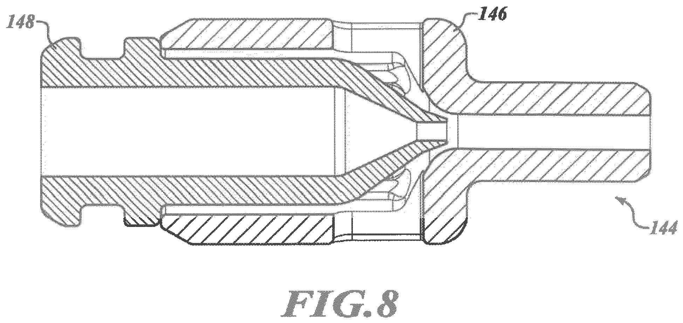

In an alternative example of a jet pump assembly 144 shown in Figure 8, the nozzle carrier 146 can be machined, deep drawn metal, and the nozzle 148 can be a plastic injection molded component such as a glass-filled POM or similar grade plastic with a predetermined low fuel-swell performance in the presence of automotive fuel. In still other examples, both the nozzle and the nozzle carrier can be a deep drawn metal, or both can be injection-molded plastic components.

The components of the jet pump assembly 44, the end cap 23, and the housing 12 are configured so that the clearances 67, 71, 73, 76, 79, 82, 83 and other clearances are not less than predetermined minimum clearances under a predetermined range of operating conditions that includes a maximum fuel swell condition and a re-dry of the components from the fuel swell condition. Under this configuration, variations in the sizes of the radial clearances 67, 71, 73, 76, 82, 83 will not affect the relative fit of the nozzle 48 to the nozzle carrier 46. The assembled nozzle 48 and nozzle carrier 46 will be able to move radially as a unit relative to the end cap 23 and the housing 12, and to rotate as a unit relative to the end cap 23 and the housing 12 about the aligned longitudinal center axes A1, A2 without affecting the alignment of the longitudinal axis A1 of the nozzle carrier 46 with the longitudinal axis A2 of the nozzle 48. If the entire jet pump assembly 44 rotates as a unit, the additional ports 50A, 50B, etc. will allow liquid to drain into the longitudinal passage 52 as one will be in communication with the lower extent 53 regardless of the position of the port 50 relative to the lower extent 53.

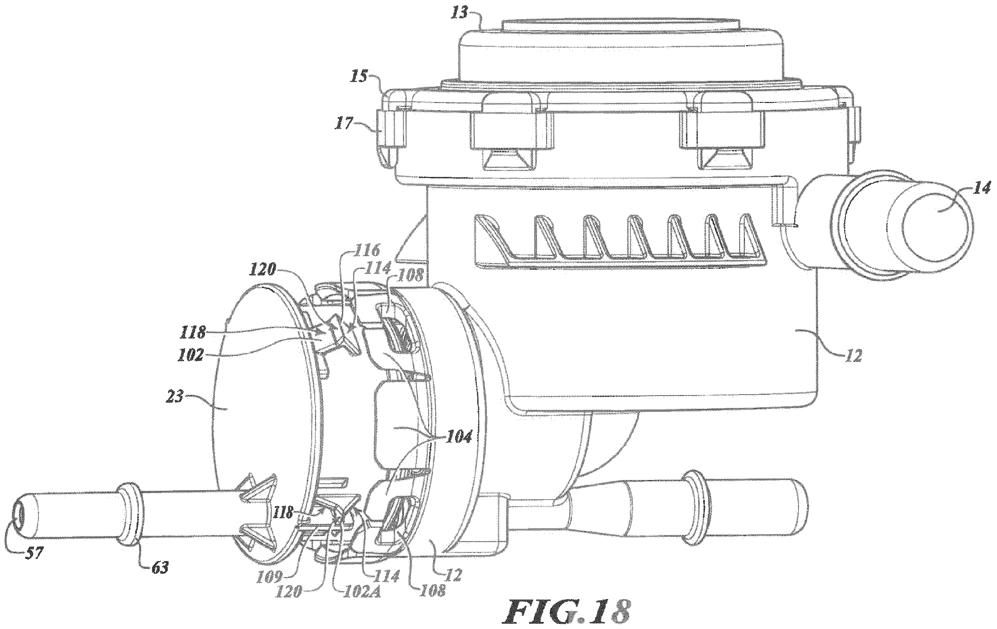

In order for the nozzle 48 to remain sufficiently axially aligned with the nozzle carrier 46 throughout the range of operating conditions, a constant axial compressive force should be maintained in the jet pump assembly 44. Accordingly, the liquid trap assembly 10 provides a constant tension snap-fit between a first component (i.e., the end cap 23) and a second component (i.e., the housing 12) to create a constant axial compressive force on additional components, such as a the nozzle 48 and the nozzle carrier 46, supported by and between the first and second components to prevent relative axial movement of the nozzle 48 and the nozzle carrier 46. As best shown in Figures 2 and 18, the end cap 23 has a first outer surface 100 and a plurality of spaced extensions 102 and 102A extending outward from the first outer surface 100. The first outer surface 100 is generally cylindrical.

The housing 12 has a flexible rim 104 surrounding and partially defining a cavity 105, indicated in Figure 1. The cavity 105 is configured to contain a portion of the end cap 23 when the end cap 23 is partially inserted into the cavity 105, and to contain the cavity 42 with spring 40 and check valve 36. The flexible rim 104 is generally cylindrical and is configured to surround the first outer surface 100 when the end cap 23 is fit partially within the cavity 105. The flexible rim 104 is shown with discrete flap portions 106 in Figure 2, but could instead be continuous and unsectioned.

The flexible rim 104 has spaced recesses 108 that have a spacing substantially equal to the spacing of the extensions 102, 102A. The rim 104 flexes to surround the end cap 23 and trap the extensions 102 in the recesses 108. Although flexible, the rim 104 remains biased toward an unflexed state when in the flexed state shown in Figure 2. The unflexed state is the position of the rim 104 when the end cap 23 is removed from the cavity 105. In the unflexed state, the effective diameter of the rim 104 will be less than in the flexed state. In other words, the flexible rim 104 is configured with a material, such as a plastic, that has sufficient stiffness to return to a pre-stressed or unflexed state when an object or force causing the flexed state is removed. When flexed, the flexible rim 104 provides a constant radially-inward force F (i.e., a force toward the center axis A3 of the flexible rim 104) as shown in Figure 2. As shown in Figure 18, some of the extensions 102A have a center portion 109 that interrupts the angled surfaces and acts as an anti-rotation feature to prevent axial movement of the end cap 23 relative to the housing 12. The end cap 23 and the housing 12 can be the same material or a different material, such as the same or different types of plastic that can swell and shrink in the presence of fuel or other medium over the range of operating conditions.

The extensions 102, 102A and the flexible rim 104 are configured so that the extensions 102, 102A will be retained in the recesses 108 and will prevent the rim 104 from returning to the unflexed state over a predetermined range of operating conditions experienced by the assembly 10 during use. As explained herein, the constant radially-inward force F of the rim 104, illustrated at each flap portion 106 of Figure 2, creates a force F1 at the interface of each extension 102 with the rim 104 that pulls the housing 12 toward the end cap 23, and a reaction force F2 at the interface of each extension 102, 102A with the rim 104 that pushes the end cap 23 toward the housing 12. The forces F1, F2 are maintained over the predetermined range of operating conditions due to the bias of the rim 104 toward the unflexed state. The force F1 and reaction force F2 are in opposite directions, and are parallel with a center axis A3 of the end cap 23 and flexible rim 104 shown in Figure 1. The center axis A3 is in turn parallel with the aligned axes A1, A2 of the nozzle 48 and nozzle carrier 46.

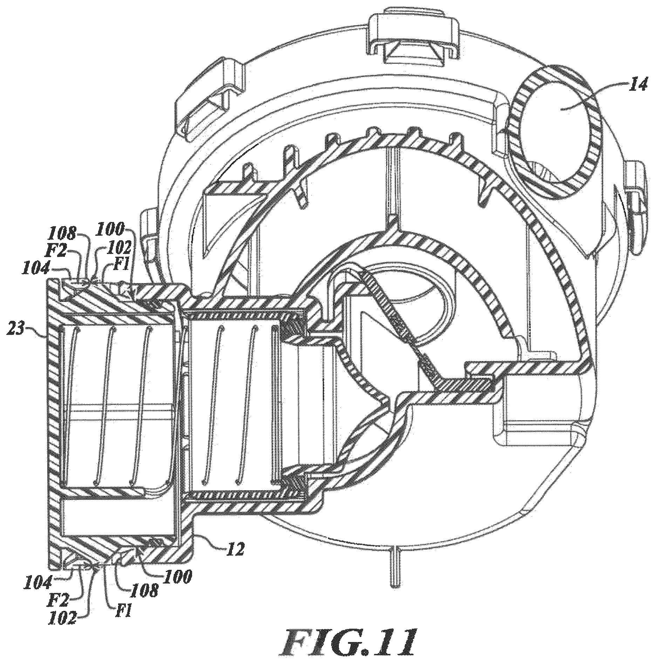

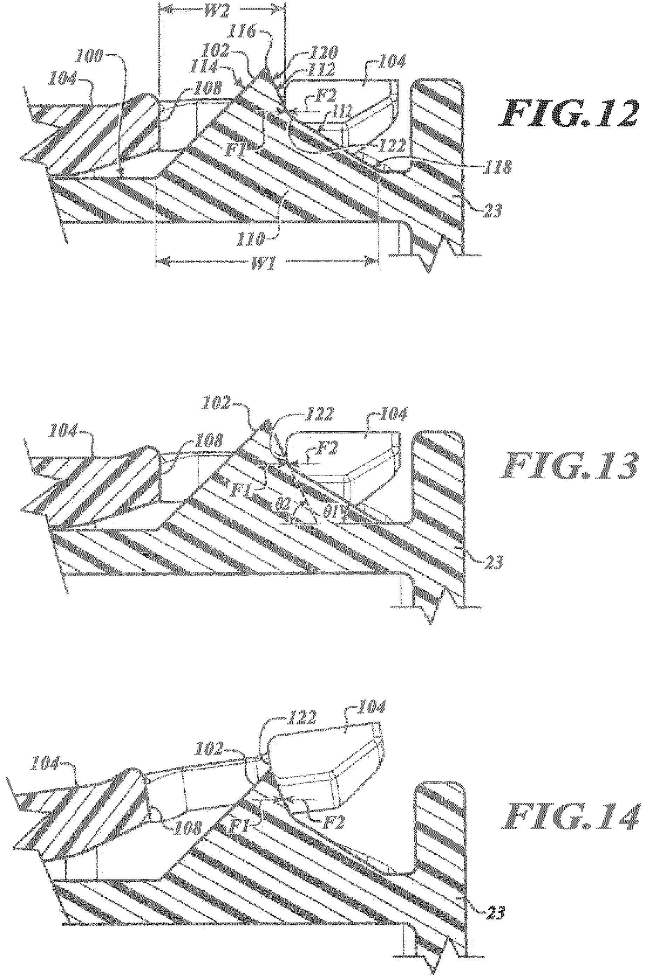

Figures 12-14 show the interface of one of the extensions 102, not representative of the invention, with the flexible rim 104 in greater detail, and are representative of the interface of each of the extensions 102, 102A with the rim 104. The extension 102 shown is the lower extension of Figure 11 but rotated in view to show the extension 102 generally upright. The extension 102 has a base 110 with a first width W1 at the outer surface 100 of the end cap 23. The bottom of the extension 102 is the base 110. Each recess 108 has a second width W2 narrower than the first width W1 to prevent the base 110 from fitting within the recess 108 under the predetermined range of operating conditions. In other words, the base 110 is configured to be too wide to fit within the recess 108 under the entire range of operating conditions, including swelling of the end cap 23 and housing 12 that can occur in the presence of fuel, and re-drying of the end cap 23 and housing 12 after such swelling. As shown in Figure 12, the position of the rim 104 on the extension 102 is a nominal state representing operating conditions that are neither: (i) those causing a maximum swell of components; nor (ii) those causing a minimum size of the components, such as would occur without any swelling after a re-dry.

Each extension 102, 102A has a first angled surface 112 and a second angled surface 114 that each extend from the outer surface 100 at opposite ends of the base 110 and meet at a ridge 116. The first angled surface 112 has a first portion 118 with a first incline relative to the base 110, and a second portion 120 with a second incline relative to the base 110. The first portion 118 extends from the base 110 to the second portion 120, and the second portion 120 extends from the first portion 118 to the ridge 116. The second incline is steeper than the first incline. This is indicated in Figure 13 by a first angle of incline Θ1 of the first portion 118 being less than a second angle of incline Θ2 of the second portion 120.

The extension 102 is configured so that an edge 122 of the flexible rim 104 at the recess 108 in which the extension 102 is retained rests along the first angled surface 112 under the entire predetermined range of operating conditions. An overall axial dimension X shown in Figure 3 in which the nozzle carrier 46 and nozzle 48 are constrained changes as the nozzle carrier 46, end cap 23, and housing 12 swell due to fuel exposure and shrink due to re-drying after exposure to fuel or other medium. Both the relative axial dimensions of these components as well as the clearances between the components change. For example, Figure 13 represents the relative positions of the extension 102 and the flexible rim 104 when nozzle carrier 46, end cap 23, and housing 12 shrink due to re-drying after exposure to fuel or other medium. Figure 13 represents the minimum sizes of these components under these predetermined operating conditions. In that instance, because the axial dimension X is likely to shrink, the extensions 102, 102A will be axially closer to the recesses 108, there will be less tension between the flexible rim 104 and the extensions 102, 102A, and the edge 122 of the rim 104 will rest closer to the base 110 along the surface 118 than under the first predetermined operating condition of Figure 12. Even under this operating condition, however, the rim 104 is prevented from returning to an unflexed state, and some force F1 and reaction force F2 is maintained, also acting on the nozzle carrier 46 and nozzle 48 to keep these components form relative axial movement. That is, the forces F1, F2 also act at the second end 60 of the nozzle carrier 46 and the housing 12, and at the stepped shoulder 72 and the nozzle 48, as shown in Figure 3.

Figure 14 represents the relative positions of the extension 102 and the flexible rim 104 when the nozzle carrier 46, end cap 23, and housing 12 swell due to exposure to fuel or other medium. Figure 14 represents the maximum sizes of these components under all of the operating conditions. In that instance, because the axial dimension X is likely to be larger, the extensions 102, 102A will be axially further from the recesses 108, there will be greater tension between the flexible rim 104 and the extensions 102, 102A, and the edge 122 of the rim 104 will rest further from the base 110 along the surface 120. The rim 104 is prevented from returning to an unflexed state, and a force F1 and reaction force F2 is maintained, also acting on the nozzle carrier 46 and nozzle 48 to keep these components from relative axial movement.

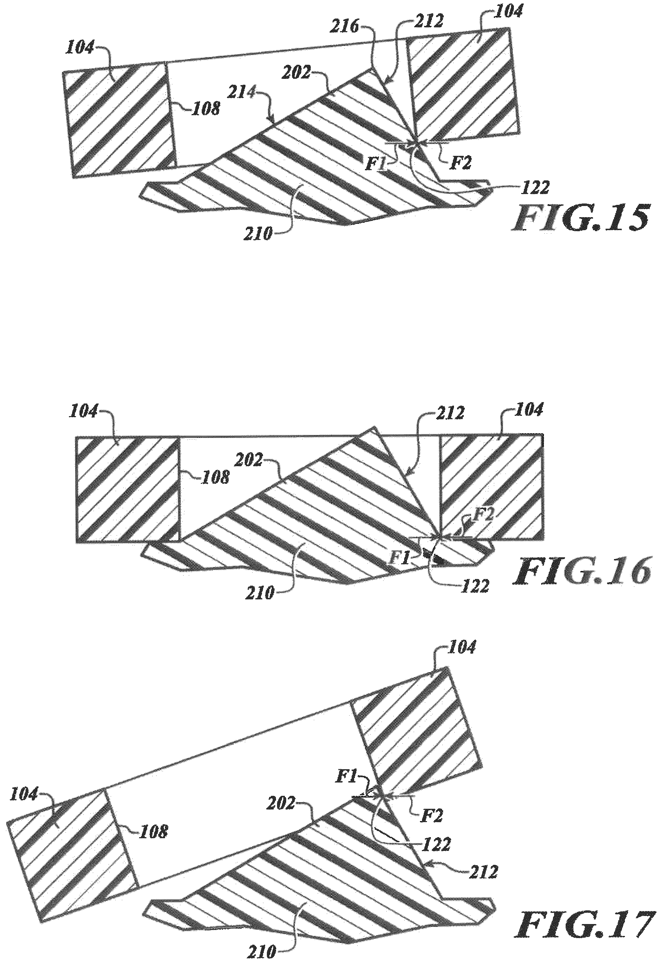

Figures 15-17 show an extension 202, representative of the invention, that is used to interface with the flexible rim 104 in a manner that will provide a constant tension and resultant axial force on the nozzle carrier 46 and nozzle 48 under the predetermined range of operating conditions. The extension 202 has a first angled surface 212 and a second angled surface 214 both extending from a base 210 and meeting at ridge 216. Unlike the extension 102, the first angled surface 212 does not have different portions with different angles of incline relative to the base 110.

Figure 15 shows the rim 104 and extension 202 in a nominal state in which the edge 122 of the rim 104 at the recess 108 interfaces with the first angled surface 212. The rim 104 is prevented from returning to an unflexed state, and some force F1 and reaction force F2 is maintained at each extension 202, also acting on the nozzle carrier 46 and nozzle 48 to keep these components from relative axial movement.

Figure 16 represents the relative positions of the extension 202 and the flexible rim 104 when the nozzle carrier 46, end cap 23, and housing 12 shrink due to re-drying after exposure to fuel or other medium. Figure 16 represents the minimum sizes of these components under all of the operating conditions. In that instance, because the axial dimension X of Figure 3 is likely to be smaller, the extensions 202 will be axially closer to the recesses 108, there will be less tension between the flexible rim 104 and the extensions 202, and the edge 122 of the rim 104 will rest closer to the base 210 along the surface 212. Even under this operating condition, the rim 104 is prevented from returning to an unflexed state, and a force F1 and reaction force F2 are maintained, also acting on the nozzle carrier 46 and nozzle 48 to keep these components from relative axial movement.

Figure 17 represents the relative positions of the extension 202 and the flexible rim 104 when the nozzle carrier 46, end cap 23, and housing 12 swell due to exposure to fuel or other medium. Figure 17 represents the maximum sizes of these components under all of the operating conditions. In that instance, because the axial dimension X of Figure 3 is likely to be larger, the extensions 202 will be axially further from the recesses 108, there will be greater tension between the flexible rim 104 and the extensions 202, and the edge 122 of the rim 104 will rest further from the base 210 along the surface 212. The rim 104 is prevented from returning to an unflexed state, and a force F1 and reaction force F2 are maintained, also acting on the nozzle carrier 46 and nozzle 48 to keep these components from relative axial movement.

The constant tension snap-fit ability of the extensions 102 or 202 on a first component (such as a housing 12) and recesses 108 on a second component (such as an end cap 23) could be used in other applications. In other words, an assembly other than a liquid trap assembly having the extensions and recesses with a constant tension snap-fit as described could be used to provide requisite constant axial force on other components requiring no relative axial movement.

The reference numbers used in the drawings and the specification along with the corresponding components are as follows:
- 10: liquid trap assembly
- 12: housing/second component
- 13: upper cap
- 14: first port/vapor flow inlet
- 15: tab
- 16: second port/vapor flow outlet
- 17: tab retainer
- 18: interior cavity
- 19: filter
- 20: liquid trap
- 21: fuel vapor recovery system
- 22: fuel tank
- 23: end cap/first component
- 26: vapor vent valve
- 28: canister (C)
- 30: engine (E)
- 35: first opening of housing 12
- 36: check valve
- 38: valve body
- 40: spring
- 42: valve cavity
- 44: jet pump assembly
- 46: nozzle carrier
- 47: ridges
- 48: venturi nozzle
- 50: entrance port
- 50A: entrance port
- 50B: entrance port
- 50C: entrance port
- 51: filter
- 52: longitudinal passage of nozzle carrier
- 53: lower extent of cavity 42
- 54: carrier portion
- 55: wall
- 56: first end of nozzle carrier 46
- 57: passage
- 58: diffuser portion
- 59: diffuser passage
- 60: second end of nozzle carrier 46
- 61: reducer
- 62: body portion of nozzle 48
- 63: inlet portion of housing 12
- 64: inlet of nozzle 48
- 65: outlet of housing 12
- 66: nozzle portion
- 67: clearance of nozzle 48 to carrier portion 54
- 68: nozzle tip
- 70: outlet of nozzle 48
- 71: predetermined clearance
- 72: first stepped shoulder of body portion
- 73: clearance first stepped portion 75 and cylindrical extension 77
- 74: first cylindrical cavity of end cap
- 75: first stepped portion of nozzle 48
- 76: first clearance of end cap 23 to carrier portion 54
- 77: cylindrical extension of end cap
- 78: cylindrical cavity of housing 12
- 79: second shoulder of nozzle 48
- 80: press-fit portion
- 81: second shoulder portion
- 82: radial clearance of diffuser portion 58 and housing 12
- 83: clearance second shoulder portion 81 to end cap 23
- 84: exterior surface of diffuser portion 58
- 85: resilient ring
- 87: O-ring seal
- 90: tubing
- 92: fuel pump (P)
- 93: liquid fuel
- 94: fuel discharge tubing
- 100: first outer surface of end cap 23
- 102: extensions of end cap 23
- 102A: extensions of end cap 23
- 104: flexible rim of housing 12
- 105: cavity of housing 12
- 106: flap portions of rim
- 108: recesses in rim
- 109: center portion of extension 102A
- 110: base of extension 102
- 112: first angled surface
- 114: second angled surface
- 116: ridge
- 118: first portion of first angled surface
- 120: second portion of second angled surface
- 122: edge of rim 104
- 146: nozzle carrier
- 148: nozzle
- 202: extension
- 210: base
- 212: first angled surface
- 214: second angled surface
- 216: ridge
- A1: longitudinal center axis of nozzle carrier 48
- A2: longitudinal center axis of nozzle 48
- A3: center axis of rim 104 and end cap 13
- C: canister
- E: engine
- F: force of rim
- F1: force of extension 102 on rim 104
- F2: reaction force of rim on extension
- P: pump
- X: axial dimension
- W1: first width of base
- W2: width of recess
- Θ1: first angle of incline
- Θ2: second angle of incline

While the best modes for carrying out the many aspects of the present teachings have been described in detail, those familiar with the art to which these teachings relate will recognize various alternative aspects for practicing the present teachings that are within the scope of the appended claims.

## Claims

1. An assembly comprising:
a first component (23) having a first outer surface (100) and a plurality of spaced extensions (202) extending outward from the first outer surface (100), wherein the first component (23) is an end cap; and
a second component (12) having a flexible rim (104) surrounding a cavity (105), wherein the second component (12) is a vapor valve housing, the flexible rim (104) has a plurality of spaced recesses (108), and the flexible rim (104) has a bias that biases the flexible rim (104) toward an unflexed state when in a flexed state;
wherein the first component (23) is configured to fit at least partially into the cavity (105) with the flexible rim (104) flexing to surround the first component (23) and trap the plurality of spaced extensions (202) in the plurality of recesses (108); and
wherein the plurality of spaced extensions (202) are configured to prevent the flexible rim (104) from returning to the unflexed state over a predetermined range of operating conditions, wherein the plurality of spaced extensions (202) is trapped in the plurality of recesses (108), the bias of the flexible rim (104) thereby forcing the first component (23) toward the second component (12) over the predetermined range of operating conditions;
wherein
each of the plurality of spaced extensions (202) has a base (210) with a first width at the first outer surface (100) of the first component (23);
each of the plurality of recesses (108) has a second width narrower than the first width to prevent the bases (210) of the plurality of spaced extensions (202) from fitting within the plurality of recesses (108) over the predetermined range of operating conditions;
each of the plurality of spaced extensions (202) has:
a ridge (216); and
a first angled surface (212) and a second angled surface (214) each extending from opposite ends of the base (210) and meeting at the ridge (216), wherein the first angled surface (212) has a constant angle of incline relative to the base (210); and
wherein an edge (122) of the second component (12) at the recess (108) in which the extension (202) is trapped rests along the first angled surface (212) over the predetermined range of operating conditions.

2. The assembly of claim 1, further comprising:
additional components supported by the first component (23) and the second component (12) at least partially in the cavity (105); and wherein bias of the flexible rim (104) causes the first and second components (23, 12) to force the additional components toward one another;
wherein the additional components include a jet pump nozzle (48) and a nozzle carrier (46) supporting the jet pump nozzle (48).

3. The assembly of claim 2,
wherein the edge (122) of the second component (12) at the recess (108) interfaces with the first angled surface (212) in a manner that provides a constant tension and resultant axial force on the nozzle carrier (46) and the nozzle (48) to keep the nozzle carrier (46) and the nozzle (48) from relative axial movement.

4. The assembly of claim 2,
wherein a shoulder (72) of the jet pump nozzle (48) is positioned axially between the end cap (23) and one end (56) of the nozzle carrier (46); and
wherein the nozzle carrier (46) is supported by both the end cap (23) and the housing (12).

5. The assembly of claim 2, wherein:
a first clearance (76) is defined between the nozzle carrier (46) and the end cap (23) over the predetermined range of operating conditions; and
wherein the nozzle carrier (46) and the housing (12) are configured to have a press-fit along only a portion of an exterior surface of the nozzle carrier (46) under the predetermined range of operating conditions; the nozzle carrier (46) and the nozzle (48) thereby being movable as a unit relative to the end cap (23) and the housing (12) within the clearance (76) without affecting an alignment of a longitudinal axis of the nozzle carrier (A1) with a longitudinal axis of the nozzle (A2).

6. The assembly of claim 1, wherein the plurality of spaced extensions (202) is configured to prevent the flexible rim (104) from returning to the unflexed state over the predetermined range of operating conditions to thereby maintain a force (F1) pushing the first component (23) toward the second component (12) and a reaction force (F2) pulling the second component (12) toward the first component (23) over the predetermined range of operating conditions.

7. The assembly of claim 6, wherein the force (F1) and the reaction force (F2) are due to the bias of the flexible rim (104) toward the unflexed state.

8. The assembly of claim 6, wherein the first outer surface and the flexible rim (100, 104) define a center axis (A3), and wherein the force (F1) and the reaction force (F2) are in opposite directions that are parallel with the center axis (A3).

9. The assembly of claim 1, wherein at least one of the first component (23) and the second component (12) is formed of a material that swells over the predetermined range of operating conditions when the material is exposed to fuel or other medium.

10. The assembly of claim 9, wherein a tension between the flexible rim (104) and the plurality of spaced extensions (202) increases when the first component (23) and the second component (12) swell.

11. The assembly of claim 9, wherein the edge (122) of the second component (12) rests further from the base (210) along the first angled surface (212) when the first component (23) and the second component (12) swell.

12. The assembly of claim 1, wherein at least one of the first component (23) and the second component (12) is formed of a material that shrinks over the predetermined range of operating conditions when the material is dried after exposure to fuel or other medium.

13. The assembly of claim 12, wherein a tension between the rim (104) and the extensions (202) decreases when the first component (23) and the second component (12) shrink.

14. The assembly of claim 12, wherein the edge (122) of the second component (12) rests closer to the base (210) along the first angled surface (212) when the first component (23) and the second component (12) shrink.

## Patentansprüche

1. Baugruppe, umfassend:
ein erstes Bauteil (23) mit einer ersten Außenfläche (100) und einer Mehrzahl von beabstandeten Vorsprüngen (202), die sich von der ersten Außenfläche (100) nach außen erstrecken, wobei das erste Bauteil (23) eine Endkappe ist; und
ein zweites Bauteil (12) mit einem flexiblen Rand (104), der einen Hohlraum (105) umgibt, wobei das zweite Bauteil (12) ein Dampfventilgehäuse ist, der flexible Rand (104) eine Mehrzahl von beabstandeten Aussparungen (108) aufweist und der flexible Rand (104) eine Vorspannung aufweist, die den flexiblen Rand (104) in einem gebogenen Zustand in Richtung eines ungebogenen Zustands vorspannt;
wobei das erste Bauteil (23) dazu ausgebildet ist, zumindest teilweise in den Hohlraum (105) zu passen, wobei sich der flexible Rand (104) biegt, um das erste Bauteil (23) zu umgeben und die Mehrzahl von beabstandeten Vorsprüngen (202) in der Mehrzahl von Aussparungen (108) zu fangen; und
wobei die Mehrzahl von beabstandeten Vorsprüngen (202) dazu ausgebildet ist, zu verhindern, dass der flexible Rand (104) über einen vorbestimmten Bereich von Betriebsbedingungen in den ungebogenen Zustand zurückkehrt, wobei die Mehrzahl von beabstandeten Vorsprüngen (202) in der Mehrzahl von Aussparungen (108) gefangen ist, wodurch die Vorspannung des flexiblen Randes (104) das erste Bauteil (23) über den vorbestimmten Bereich von Betriebsbedingungen in Richtung des zweiten Bauteils (12) drängt;
wobei:
jeder der Mehrzahl von beabstandeten Vorsprüngen (202) eine Basis (210) mit einer ersten Breite an der ersten Außenfläche (100) des ersten Bauteils (23) aufweist;
jede der Mehrzahl von Aussparungen (108) eine zweite Breite aufweist, die schmaler als die erste Breite ist, um zu verhindern, dass die Basen (210) der Mehrzahl von beabstandeten Vorsprüngen (202) über den vorbestimmten Bereich von Betriebsbedingungen in die Mehrzahl von Aussparungen (108) passen;
jeder der Mehrzahl von beabstandeten Vorsprüngen (202) aufweist:
einen Grat (216); und
eine erste geneigte Fläche (212) und eine zweite geneigte Fläche (214), die sich jeweils von entgegengesetzten Enden der Basis (210) aus erstrecken und sich am Grat (216) treffen, wobei die erste geneigte Fläche (212) einen konstanten Neigungswinkel relativ zur Basis (210) aufweist; und
wobei eine Kante (122) des zweiten Bauteils (12) an der Aussparung (108), in welcher der Vorsprung (202) gefangen ist, über den vorbestimmten Bereich von Betriebsbedingungen entlang der ersten geneigten Fläche (212) anliegt.

2. Baugruppe nach Anspruch 1, ferner umfassend:
zusätzliche Bauteile, die von dem ersten Bauteil (23) und dem zweiten Bauteil (12) zumindest teilweise in dem Hohlraum (105) getragen werden; und wobei die Vorspannung des flexiblen Randes (104) bewirkt, dass das erste und das zweite Bauteil (23, 12) die zusätzlichen Bauteile aufeinander zu drängen;
wobei die zusätzlichen Bauteile eine Strahlpumpendüse (48) und einen die Strahlpumpendüse (48) tragenden Düsenträger (46) umfassen.

3. Baugruppe nach Anspruch 2,
wobei die Kante (122) des zweiten Bauteils (12) an der Aussparung (108) derart mit der ersten geneigten Fläche (212) zusammenwirkt, dass eine konstante Spannung und daraus resultierende axiale Kraft auf den Düsenträger (46) und die Düse (48) bereitgestellt wird, um den Düsenträger (46) und die Düse (48) von einer relativen axialen Bewegung zueinander abzuhalten.

4. Baugruppe nach Anspruch 2,
wobei eine Schulter (72) der Strahlpumpendüse (48) axial zwischen der Endkappe (23) und einem Ende (56) des Düsenträgers (46) angeordnet ist; und wobei der Düsenträger (46) sowohl von der Endkappe (23) als auch von dem Gehäuse (12) getragen wird.

5. Baugruppe nach Anspruch 2, wobei:
ein erstes Spiel (76) zwischen dem Düsenträger (46) und der Endkappe (23) über den vorbestimmten Bereich von Betriebsbedingungen ausgebildet ist; und
wobei der Düsenträger (46) und das Gehäuse (12) dazu ausgebildet sind, unter dem vorbestimmten Bereich von Betriebsbedingungen eine Presspassung nur entlang eines Teils einer Außenfläche des Düsenträgers (46) aufzuweisen; wobei der Düsenträger (46) und die Düse (48) dadurch als eine Einheit relativ zur Endkappe (23) und zum Gehäuse (12) innerhalb des Spiels (76) beweglich sind, ohne dass dies eine Ausrichtung einer Längsachse des Düsenträgers (A1) zu einer Längsachse der Düse (A2) beeinträchtigt.

6. Baugruppe nach Anspruch 1, wobei die Mehrzahl von beabstandeten Vorsprüngen (202) dazu ausgebildet ist, zu verhindern, dass der flexible Rand (104) über den vorbestimmten Bereich von Betriebsbedingungen in den ungebogenen Zustand zurückkehrt, um dadurch über den vorbestimmten Bereich von Betriebsbedingungen eine Kraft (F1), die das erste Bauteil (23) zum zweiten Bauteil (12) drückt, und eine Reaktionskraft (F2), die das zweite Bauteil (12) zum ersten Bauteil (23) zieht, aufrechtzuerhalten.

7. Baugruppe nach Anspruch 6, wobei die Kraft (F1) und die Reaktionskraft (F2) auf die Vorspannung des flexiblen Randes (104) in Richtung des ungebogenen Zustands zurückzuführen sind.

8. Baugruppe nach Anspruch 6, wobei die erste Außenfläche und der flexible Rand (100, 104) eine Mittelachse (A3) definieren, und wobei die Kraft (F1) und die Reaktionskraft (F2) in entgegengesetzten Richtungen wirken, die parallel zur Mittelachse (A3) verlaufen.

9. Baugruppe nach Anspruch 1, wobei mindestens eines von dem ersten Bauteil (23) und dem zweiten Bauteil (12) aus einem Material gebildet ist, das über den vorbestimmten Bereich von Betriebsbedingungen quillt, wenn das Material Kraftstoff oder einem anderen Medium ausgesetzt ist.

10. Baugruppe nach Anspruch 9, wobei eine Spannung zwischen dem flexiblen Rand (104) und der Mehrzahl von beabstandeten Vorsprüngen (202) zunimmt, wenn das erste Bauteil (23) und das zweite Bauteil (12) quellen.

11. Baugruppe nach Anspruch 9, wobei die Kante (122) des zweiten Bauteils (12) entlang der ersten geneigten Fläche (212) weiter von der Basis (210) entfernt anliegt, wenn das erste Bauteil (23) und das zweite Bauteil (12) quellen.

12. Baugruppe nach Anspruch 1, wobei mindestens eines von dem ersten Bauteil (23) und dem zweiten Bauteil (12) aus einem Material gebildet ist, das über den vorbestimmten Bereich von Betriebsbedingungen schrumpft, wenn das Material nach Kontakt mit Kraftstoff oder einem anderen Medium getrocknet wird.

13. Baugruppe nach Anspruch 12, wobei eine Spannung zwischen dem Rand (104) und den Vorsprüngen (202) abnimmt, wenn das erste Bauteil (23) und das zweite Bauteil (12) schrumpfen.

14. Baugruppe nach Anspruch 12, wobei die Kante (122) des zweiten Bauteils (12) entlang der ersten geneigten Fläche (212) näher an der Basis (210) anliegt, wenn das erste Bauteil (23) und das zweite Bauteil (12) schrumpfen.

## Revendications

1. Ensemble comprenant :
un premier composant (23) ayant une première surface extérieure (100) et une pluralité de saillies espacées (202) s'étendant vers l'extérieur à partir de la première surface extérieure (100), le premier composant (23) étant un couvercle d'extrémité ; et
un second composant (12) ayant une bordure flexible (104) entourant une cavité (105), le second composant (12) étant un corps de vanne à vapeur, la bordure flexible (104) ayant une pluralité d'évidements espacés (108), et la bordure flexible (104) ayant une sollicitation qui sollicite la bordure flexible (104) vers un état non fléchi lorsqu'elle est dans un état fléchi ;
dans lequel le premier composant (23) est conçu pour s'adapter au moins partiellement dans la cavité (105), la bordure flexible (104) fléchissant pour entourer le premier composant (23) et piéger la pluralité de saillies espacées (202) dans la pluralité d'évidements (108) ; et
dans lequel la pluralité de saillies espacées (202) sont conçues pour empêcher la bordure flexible (104) de revenir à l'état non fléchi sur une plage prédéterminée de conditions de fonctionnement, dans lequel la pluralité de saillies espacées (202) sont piégées dans la pluralité d'évidements (108), la sollicitation de la bordure flexible (104) entraînant de force le premier composant (23) vers le second composant (12) sur la plage prédéterminée de conditions de fonctionnement ;
dans lequel chacune de la pluralité de saillies espacées (202) a une base (210) présentant une première largeur au niveau de la première surface extérieure (100) du premier composant (23) ;
chacun de la pluralité d'évidements (108) présente une seconde largeur plus étroite que la première largeur pour empêcher les bases (210) de la pluralité de saillies espacées (202) de s'adapter à l'intérieur de la pluralité d'évidements (108) sur la plage prédéterminée de conditions de fonctionnement ;
chacune de la pluralité de saillies espacées (202) comporte :
une arête (216) ; et
une première surface inclinée (212) et une seconde surface inclinée (214) s'étendant chacune à partir des extrémités opposées de la base (210) et se rejoignant au niveau de l'arête (216), la première surface inclinée (212) présentant un angle d'inclinaison constant par rapport à la base (210) ; et
dans lequel un bord (122) du second composant (12) au niveau de l'évidement (108) dans lequel la saillie (202) est piégée est en appui le long de la première surface inclinée (212) sur la plage prédéterminée de conditions de fonctionnement.

2. Ensemble selon la revendication 1, comprenant en outre :
des composants supplémentaires supportés par le premier composant (23) et le second composant (12) au moins partiellement dans la cavité (105) ; et dans lequel la sollicitation de la bordure flexible (104) amène les premier et second composants (23, 12) à entraîner de force les composants supplémentaires l'un vers l'autre ;
dans lequel les composants supplémentaires comprennent une buse de pompe à jet (48) et un support de buse (46) supportant la buse de pompe à jet (48).

3. Ensemble selon la revendication 2,
dans lequel le bord (122) du second composant (12) au niveau de l'évidement (108) forme une interface avec la première surface inclinée (212) d'une manière qui produit une tension, et une force axiale résultante, constante sur le support de buse (46) et la buse (48) pour empêcher un déplacement axial relatif du support de buse (46) et de la buse (48).

4. Ensemble selon la revendication 2,
dans lequel un épaulement (72) de la buse de pompe à jet (48) est positionné axialement entre le couvercle d'extrémité (23) et une extrémité (56) du support de buse (46) ; et
dans lequel le support de buse (46) est supporté à la fois par le couvercle d'extrémité (23) et le corps (12).

5. Ensemble selon la revendication 2, dans lequel :
un premier jeu (76) est défini entre le support de buse (46) et le couvercle d'extrémité (23) sur la plage prédéterminée de conditions de fonctionnement ; et
dans lequel le support de buse (46) et le corps (12) sont conçus de telle sorte qu'il existe entre eux un ajustement serré le long seulement d'une partie d'une surface extérieure du support de buse (46) sur la plage prédéterminée de conditions de fonctionnement ; le support de buse (46) et la buse (48) pouvant ainsi être déplacés comme un bloc par rapport au couvercle d'extrémité (23) et au corps (12) à l'intérieur du jeu (76) sans affecter l'alignement d'un axe longitudinal du support de buse (A1) avec un axe longitudinal de la buse (A2).

6. Ensemble selon la revendication 1, dans lequel la pluralité de saillies espacées (202) sont conçues pour empêcher la bordure flexible (104) de revenir à l'état non fléchi sur la plage prédéterminée de conditions de fonctionnement pour maintenir ainsi une force (F1) poussant le premier composant (23) vers le second composant (12) et une force de réaction (F2) tirant le second composant (12) vers le premier composant (23) sur la plage prédéterminée de conditions de fonctionnement.

7. Ensemble selon la revendication 6, dans lequel la force (F1) et la force de réaction (F2) sont dues à la sollicitation de la bordure flexible (104) vers l'état non fléchi.

8. Ensemble selon la revendication 6, dans lequel la première surface extérieure et la bordure flexible (100, 104) définissent un axe central (A3), et dans lequel la force (F1) et la force de réaction (F2) sont dans des sens opposés qui sont parallèles à l'axe central (A3).

9. Ensemble selon la revendication 1, dans lequel au moins l'un du premier composant (23) et du second composant (12) est composé d'un matériau qui gonfle sur la plage prédéterminée de conditions de fonctionnement lorsque le matériau est exposé à du combustible ou à une autre substance.

10. Ensemble selon la revendication 9, dans lequel une tension entre la bordure flexible (104) et la pluralité de saillies espacées (202) augmente lorsque le premier composant (23) et le second composant (12) gonflent.

11. Ensemble selon la revendication 9, dans lequel le bord (122) du second composant (12) est en appui plus loin de la base (210) le long de la première surface inclinée (212) lorsque le premier composant (23) et le second composant (12) gonflent.

12. Ensemble selon la revendication 1, dans lequel au moins l'un du premier composant (23) et du second composant (12) est composé d'un matériau qui se contracte sur la plage prédéterminée de conditions de fonctionnement lorsque le matériau est séché après exposition à un combustible ou à une autre substance.

13. Ensemble selon la revendication 12, dans lequel une tension entre la bordure (104) et les saillies (202) diminue lorsque le premier composant (23) et le second composant (12) se contractent.

14. Ensemble selon la revendication 12, dans lequel le bord (122) du second composant (12) est en appui plus près de la base (210) le long de la première surface inclinée (212) lorsque le premier composant (23) et le second composant (12) se contractent.
